Europäisches Patentamt

European Patent Office

Office européen des brevets

(11) Numéro de publication: **0 058 114**
**B1**

# (12) FASCICULE DE BREVET EUROPEEN

(45) Date de publication du fascicule du brevet:
18.07.84

(21) Numéro de dépôt: **82400182.0**

(22) Date de dépôt: **04.02.82**

(51) Int. Cl.³: **H 02 K 44/02**

(54) Pompe électromagnétique à conduction pour métal liquide.

(30) Priorité: **04.02.81 FR 8102099**

(43) Date de publication de la demande:
**18.08.82 Bulletin 82/33**

(45) Mention de la délivrance du brevet:
**18.07.84 Bulletin 84/29**

(84) Etats contractants désignés:
**DE FR GB**

(56) Documents cités:
**EP - A - 0 021 920**
**FR - A - 2 360 206**

(73) Titulaire: **NOVATOME, 20 Avenue Edouard Herriot,
F-92350 Le Plessis Robinson (FR)**

(72) Inventeur: **Carbonnel, Henri, 11 avenue Beauséjour,
F-92160 Antony (FR)**

(74) Mandataire: **Dupuy, Louis et al, CREUSOT-LOIRE 15 rue
Pasquier, F-75383 Paris Cedex 8 (FR)**

BUNDESDRUCKEREI BERLIN

**Description**

La présente invention concerne une pompe électromagnétique à conduction pour métal liquide, c'est à dire une pompe dans laquelle le métal liquide est mis en circulation sous l'effet d'un champ magnétique et d'un courant électrique perpendiculaires entre eux et traversant un canal ascendant de pompage du métal liquide (le métal peut être par exemple constitué par de l'aluminium).

Dans les pompes à conduction existantes, on dispose deux circuits magnétiques dans des plans verticaux, chaque circuit étant excité par une bobine d'alimentation (brevet français 2 458 937).

Etant donné que de telles pompes sont destinées à être immergées dans du métal liquide, qui peut être tres chaud, il est preferable que les bobines d'alimentation se situent au-dessus du corps en matériau réfractaire de la pompe.

Un inconvénient pour ces pompes réside dans le fait qu'étant donné qu'il y a deux bobines dans la partie supérieure de la pompe, cela implique un certain écartement des deux circuits magnétiques au moins égal à la somme des épaisseurs des bobines. La distance séparant les deux branches horizontales inférieures des deux circuits magnétiques est donc grande elle aussi, et la spire constituée d'un canal en forme de U renversé qui passe par l'entrefer de la première branche et enlace la deuxième branche suit donc un chemin assez long, ce qui entraine des pertes par effet Joule puisque cette spire est parcourue par un courant électrique. D'autre part, la présence de ces deux circuits magnétiques excités entraine des couplages magnétiques entre eux qui sont gênants.

Un autre inconvénient pour de telles pompes réside dans le fait que la présence, à la verticale de l'entrefer, d'un circuit magnétique, surtout s'il est pourvu d'une bobine d'excitation, implique que le canal ascendant traversant l'entrefer doit être dévié latéralement pour déboucher dans la partie supérieure du corps de pompe à une certaine distance de la bobine. Le chemin d'écoulement du métal liquide comporte ainsi des déviations et est donc assez long. D'autre part, lorsque l'on veut réaliser un tel dispositif, on s'aperçoit qu'au niveau de l'entrefer le chemin parcouru par les courants électriques induits comporte des courbures très accentuées, ce qui, dans le champ magnétique transversal, engendre des forces divergentes, dont une partie est inefficace pour provoquer l'écoulement du métal.

Pour pallier ces inconvénients la demanderesse a eu l'idée de disposer le premier circuit magnétique de façon à ce que l'axe médian de ses branches passe par un plan horizontal, le deuxième circuit magnétique gardant son axe médian dans un plan vertical. Cette disposition nouvelle du premier circuit magnétique implique qu'il soit pratiquement noyé dans le corps de la pompe, un bobinage associé à ce premier circuit magnétique serait alors difficilement utilisable à cause de la température élevée et de la difficulté pour le refroidir.

Mais il est connu (brevet français 2 360 206), pour des pompes à conduction à deux circuits magnétiques de disposer une bobine d'excitation uniquement sur le circuit magnétique servant à créer le courant induit, l'autre circuit magnétique comprenant l'entrefer et servant à créer le champ magnétique étant alors dépourvu de bobine d'excitation.

La demanderesse a eu l'idée d'appliquer cette disposition connue à son propre dispositif en supprimant par conséquent la bobine du premier circuit magnétique qui peut alors être effectivement noyé dans le matériau réfractaire sans aucun problème.

La présente invention concerne donc une pompe électromagnétique à conduction immergée pour métal liquide comportant:

— une partie en matériau réfractaire immergeable dans un bain de ce métal liquide,
— un premier circuit magnétique doté d'un entrefer,
— un deuxième circuit magnétique fermé doté d'une bobine d'alimentation et comprenant une branche horizontale noyée dans le matériau réfractaire,
— un canal ascendant de pompage du métal liquide ménagé dans le matériau réfractaire et traversant l'entrefer du premier circuit magnétique,
— une spire ménagée dans le matériau réfractaire, contenant du métal liquide,

cette spire étant en forme de U renversé dont le plan médian est un plan vertical passant par l'entrefer du premier circuit, les deux jambes du U plongeant dans le bain de métal pour fermer la spire, l'une des jambes étant en fait constituée d'un tronçon du canal ascendant et l'autre jambe enlaçant partiellement la branche horizontale du deuxième circuit magnétique.

Selon l'invention, le premier circuit magnétique est dépourvu de bobine d'excitation et disposé de façon à ce que l'axe médian de ses branches passe par un plan sensiblement horizontal, le canal ascendant traversant l'entrefer étant alors sensiblement rectiligne et vertical le long du deuxième circuit magnétique.

D'autres avantages propres à cette invention apparaîtront lors de la description détaillée de l'exemple de réalisation qui va suivre, illustré par les figures annexées.

La fig. 1 représente une vue en perspective d'une pompe selon l'invention.

La fig. 2 représente une coupe d'une pompe selon le brevet français 2 458 937, effectuée au niveau du plan passant par l'entrefer.

La fig. 4 représente une coupe d'une pompe selon l'invention, effectuée au niveau du plan passant par l'entrefer.

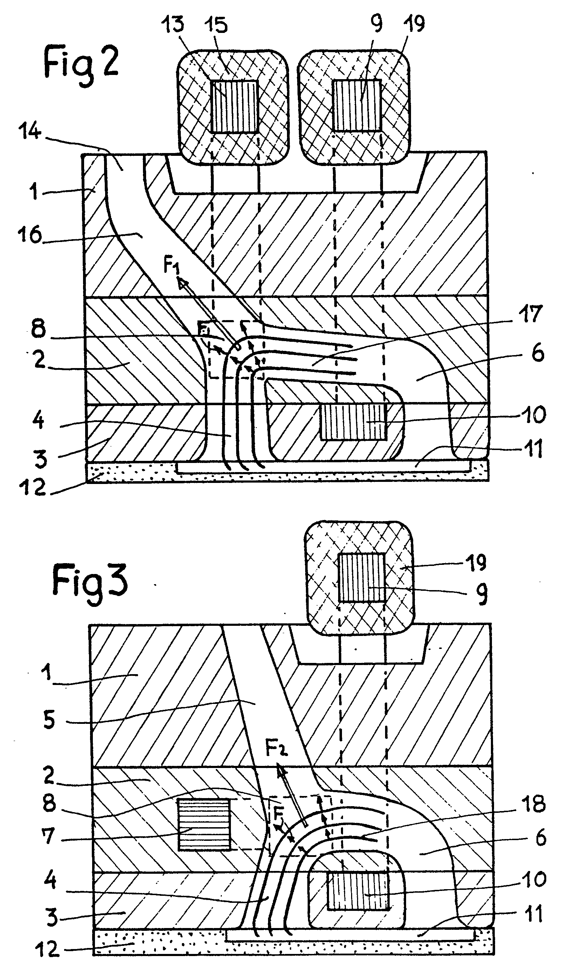

Des repères indentiques sont affectés aux pièces ayant même forme et même fonction, qu'elles appartiennent au brevet français 2 458 937 (fig. 2) ou à la présente demande.

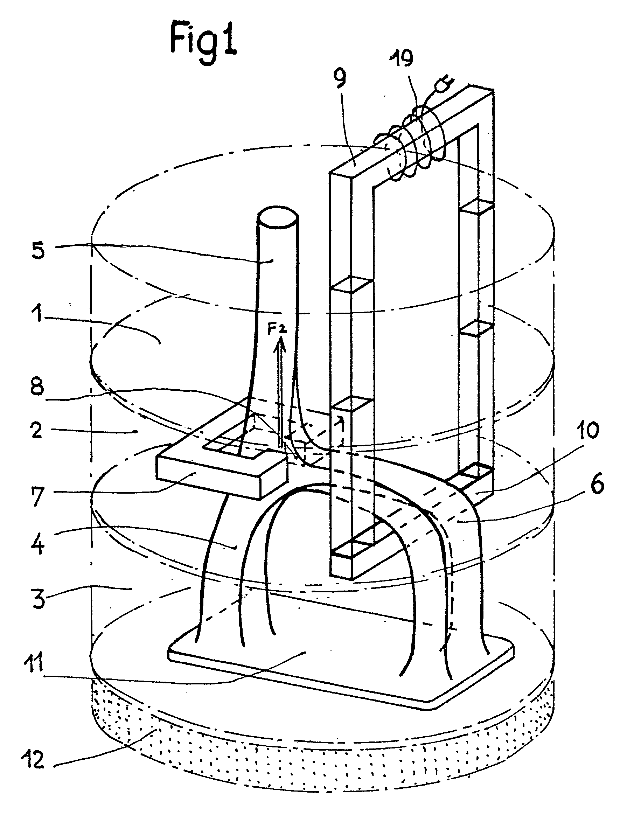

En se reportant à la fig. 1, on voit un ensemble de pièces 1, 2, 3 formant le corps en matériau réfractaire de la pompe qui est essentiellement immergé dans le métal liquide. Dans ce corps de pompe sont ménagées diverses cavités remplies de métal liquide et formant un canal 4 d'aspiration débouchant à la partie inférieure du corps de pompe, un canal 5 de refoulement débouchant à la partie supérieure, et un canal 6 relié au point de jonction des canaux 4 et 5 et débouchant aussi à la partie inférieure du corps de pompe.

Un premier circuit magnétique 7 dépourvu de bobine d'alimentation présente un entrefer 8 situé dans un plan sensiblement vertical. Le lieu commun de jonction des canaux 4, 5 et 6 présente une zone de forme plate se situant dans un plan vertical, cette zone se trouvant à l'intérieur de l'entrefer 8.

Un deuxième circuit magnétique 9 fermé entoure le canal 6. Ce circuit magnétique 9 comporte une bobine 19 qui est parcourue par un courant électrique alternatif. Les branches de ce circuit magnétique 9 sont situées dans un plan sensiblement vertical. Les canaux 4 et 6 forment ensemble une spire en forme de U renversé qui enlace la branche horizontale 10 du deuxième circuit magnétique et dont les deux jambes plongent dans le métal liquide de la chambre d'aspiration 11 sous la partie inférieure de la pompe et qui est destiné à être aspiré. Sur la face inférieure de la pompe, est disposé un filtre 12 qui entoure la chambre 11.

La pompe fonctionne de la manière suivante:

Le deuxième circuit magnétique 9, excité par la bobine 19 est traversé par un flux magnétique alternatif qui engendre un courant électrique induit, alternatif qui tourne dans la boucle conductrice de métal liquide constituée par l'ensemble 4, 6 et 11. Ce courant électrique traverse l'entrefer 8 selon des directions restant dans un plan sensiblement vertical, ce qui engendre dans le premier circuit magnétique 7 un champ magnétique qui au niveau de l'entrefer a une direction sensiblement horizontale et perpendiculaire au courant électrique induit circulant aussi dans cet entrefer. Cette présence simultanée de champ et de courant perpendiculaires entre eux crée dans la troisième direction perpendiculaire une force au sein même du métal liquide qui a une résultante $F_2$ sensiblement verticale et de bas en haut ce qui provoque le refoulement du métal liquide dans le canal 5 et en conséquence une aspiration du métal liquide en provenance du canal 4 ou en provenance à la fois des canaux 4 et 6 qui plongent tous les deux dans la chambre d'aspiration 11. Le filtre 12 permet d'arrêter les impuretés du métal liquide avant son passage dans la chambre 11.

En se reportant aux fig. 2 et 3 nous pouvons comparer les dispositions propres à la présente invention (fig. 3) par rapport aux dispositions antérieures (fig. 2) qui étaient celle du brevet français 2 458 937.

Dans la disposition antérieure le circuit magnétique 13 comportant l'entrefer 8 étant disposé verticalement, le conduit de refoulement 16 devait suivre un chemin ascendant non vertical pour déboucher en 14 à côté de la bobine 15.

Dans la disposition relative à la présente invention (fig. 3) le circuit magnétique 7 placé dans un plan horizontal permet une disposition sensiblement verticale du canal 5. Nous remarquons par ailleurs que cette nouvelle disposition permet de rapprocher la zone de l'entrefer 8 de la branche inférieure 10 du deuxième circuit magnétique, ce qui permet à la spire formée par les canaux 4, 6 et 11 d'avoir une longueur totale plus courte. Il y a donc diminution des pertes par effet Joule puisque le courant électrique circulant dans cette spire emprunte un chemin plus court. D'autre part la disposition antérieure (fig. 2) présentant un entrefer plus éloigné implique un parcours à la spire qui présente un petit rayon de courbure dans la zone de l'entrefer. Par conséquent, et cela ressort bien des fig. 2 et 3, on s'aperçoit qu'au niveau de l'entrefer 8, le chemin 17 que parcourt le courant électrique comporte une courbure plus accentuée dans le dispositif antérieur que la courbure du chemin 18 que parcourt le courant électrique dans le dispositif propre à l'invention. Il s'ensuit que les forces élémentaires F sont moins divergentes dans le nouveau dispositif et contribuent donc mieux à la création de la force résultante de refoulement $F_2$ en minimisant les turbulences. Le canal de refoulement 5 étant plus vertical et rectiligne offre aussi moins de pertes de charges.

L'invention ne se limite pas au mode de réalisation qui vient d'être décrit; elle en comporte au contraire toutes les variantes et l'on peut modifier des points de détail sans pour autant sortir de cadre de l'invention.

**Revendication**

Pompe électromagnétique à conduction immergée pour métal liquide comportant:

— une partie en matériau réfractaire (1, 2, 3) immergeable dans un bain de métal liquide,
— un premier circuit magnétique (7) doté d'un entrefer (8),
— un deuxième circuit magnétique (9, 10) fermé doté d'une bobine d'alimentation (19) et comprenant une branche horizontale (10) noyée dans le matériau réfractaire,
— un canal ascendant (4, 5) de pompage du métal liquide ménagé dans le matériau réfractaire et traversant l'entrefer (8) du premier circuit magnétique (7),
— une spire (4, 6, 11) ménagée dans le matériau réfractaire contenant du métal liquide,

cette spire étant en forme de U renversé dont le plan médian est un plan vertical passant par l'entrefer (8) du premier circuit (7), les deux jambes (4, 6) du U plongeant dans le bain (11) de métal pour fermer la spire, l'une des jambes (4) étant en fait constituée d'un tronçon du canal ascendant (4, 5) et l'autre jambe (6) enlaçant partiellement la branche horizontale (10) du deuxième circuit magnétique, caractérisée en ce que le premier circuit magnétique est dépourvu de bobine d'alimentation et est disposé de façon à ce que l'axe médian de ses branches passe par un plan sensiblement horizontal, le canal ascendant (4, 5) traversant l'entrefer (8) étant alors sensiblement rectiligne et vertical.

## Patentanspruch

Elektromagnetische leitende Tauchpumpe für flüssiges Metall bestehend aus:

— einem Teil aus feuerfestem Material (1, 2, 3) das in eine flüssige Metallschmelze eintauchbar ist,
— einem ersten einen Luftspalt (8) aufweisenden Magnetkreis (7),
— einem zweiten geschlossenen Magnetkreis (9, 10) mit einer Spule (19) und einem horizontalen in das feuerfeste Material eingelassenen Schenkel (10),
— einem in dem feuerfesten Material angeordneten, den Luftspalt (8) des ersten Magnetkreises (7) durchquerenden Steigkanal (4, 5) zur Förderung des flüssigen Metalls,
— einer in dem feuerfesten Material angeordneten, das flüssige Metall enthaltenden Windung (4, 6, 11),

wobei diese Windung als umgekehrtes U ausgebildet ist und deren Mittelebene eine durch den Luftspalt (8) des ersten Magnetkreises (7) laufende senkrechte Ebene ist, während die beiden Zweige (4, 6) des U's zum Schließen der Windung in das Metallbad (11) tauchen — der eine Zweig (4) ist aus einem Abschnitt des Steigkanals (4, 5) gebildet und der andere Zweig (6) windet sich teilweise um den horizontalen Schenkel (10) des zweiten Magnetkreises herum — dadurch gekennzeichnet, daß der erste Magnetkreis spulenlos und derart angeordnet ist, daß die Mittelachse seiner Schenkel durch eine im wesentlichen horizontale Ebene laufen, wobei der den Luftspalt (8) durchquerende Steigkanal (4, 5) dann wesentlich geradlinig und senkrecht verläuft.

## Claim

A submerged electromagnetic conduction pump for liquid metal, comprising:

— a part made of refractory material (1, 2, 3) capable of being immersed in a bath of liquid metal,
— a first magnetic circuit (7) provided with a gap (8),
— a second closed magnetic circuit (9, 10) provided with a supply coil (19) and comprising a horizontal arm (10) immersed in the refractory material,
— an ascending channel (4, 5) for pumping the liquid metal, arranged in the refractory material and passing through the gap (8) of the first magnetic circuit (7),
— a whorl (4, 6, 11) arranged in the refractory material containing liquid metal,

this whorl being in the shape of an inverted U whose median plane is a vertical plane passing through the gap (8) of the first circuit (7), both legs (4, 6) of the U being immersed in the metal bath (11) to close the whorl, one of the legs (4) being, in fact, formed by a section of the ascending channel (4, 5) and the other leg (6) entwining partly the horizontal arm (10) of the second magnetic circuit, characterised in that the first magnetic circuit has no supply coil and is arranged so that the median axis of its arms passes through a substantially horizontal plane, the ascending channel (4, 5) passing through the gap (8) being then substantially rectilinear and vertical.

# Fig 1

# Fig 2

13  15          9  19

14
1
16
F₁
8
2          17
        6
4          10
3          11
12

# Fig 3

19
9

1
5
F₂
2
8
7
        18
        6
4          10
3          11
12